# EUROPÄISCHE PATENTSCHRIFT

(11) **EP 3 655 248 B1**
(45) Veröffentlichungstag und Bekanntmachung des Hinweises auf die Patenterteilung: **10.04.2024**
(21) Anmeldenummer: 18737926.8
(22) Anmeldetag: 13.07.2018
(51) Int. Cl.: B33Y 10/00, B29C 64/393, G06F 21/10, B33Y 50/02, H04L 9/32, H04L 9/00

(54) **VERFAHREN ZUR KRYPTOLOGISCHEN SICHERUNG EINES ADDITIVEN FERTIGUNGSVORGANGS**
METHOD FOR CRYPTOLOGICALLY SECURING AN ADDITIVE MANUFACTURING PROCESS
PROCÉDÉ DE SÉCURITÉ CRYPTOLOGIQUE D'UN PROCESSUS DE FABRICATION ADDITIVE

(30) Priorität: 17.07.2017 EP 17181618
(43) Veröffentlichungstag der Anmeldung: 27.05.2020
(73) Patentinhaber: Stratasys, Inc., Eden Prairie, MN 55344 (US)
(72) Erfinder: KESPOHL, Hans, Dieter, 50226 Frechen (DE)
(74) Vertreter: Davepon, Björn
(86) Internationale Anmeldenummer: PCT/EP2018/069070
(87) Internationale Veröffentlichungsnummer: WO 2019/016090

(56) Entgegenhaltungen:
- EP-A1- 2 757 736
- EP-A1- 3 226 165
- WO-A1-2017/201489
- WO-A1-2018/165155
- WO-A2-2012/146943
- US-A1- 2014 324 204
- US-A1- 2015 134 955
- Jeff Herbert ET AL: "A Novel Method for Decentralised Peer-to-Peer Software License Validation Using Cryptocurrency Blockchain Technology", , 27. Januar 2015 (2015-01-27), XP055358639, Gefunden im Internet: URL:http://crpit.com/confpapers/CRPITV159H erbert.pdf [gefunden am 2017-03-24]

## Beschreibung

Die Erfindung betrifft ein Verfahren zur kryptologischen Sicherung eines additiven Fertigungsvorgangs, einen Datenstrang zur kryptologischen Sicherung eines additiven Fertigungsvorgangs sowie ein System zur kryptologischen Sicherung eines additiven Fertigungsvorgangs.

Unter den bekannten Fertigungsverfahren, zu denen sowohl urformende Verfahren wie etwa der Spritzguss als auch umformende oder trennende Verfahren zählen, nehmen die additiven Fertigungsverfahren, bei denen Objekte schichtweise aufgebaut werden, mehr und mehr an Bedeutung zu. Dies gilt insbesondere für den computergesteuerten 3D-Druck, welcher die Möglichkeit praktisch eröffnet, ein Objekt vollständig in elektronischer Form zu definieren und dann basierend auf dieser Definition von einem oder mehreren 3D-Druckern herstellen zu lassen, welche prinzipiell verteilt und an beliebigen Orten angeordnet sein können. Da sich die elektronischen Daten auch beliebig zwischen unterschiedlichen, potenziell weltweit verteilten Teilnehmern austauschen lassen, kann also nicht nur eine physikalische Lieferkette für die Herstellung des Objekts zwischen einzelnen Standorten weitgehend - bis auf den ggf. erforderlichen Transport der Ausgangsmaterialien - entfallen, sondern es ergeben sich auch viele Möglichkeiten der Zusammenarbeit von verteilten Standorten aus bei der Erstellung der Definition des Objekts in elektronischer Form. Ferner kommt hinzu, dass bei modernen Wirtschaftsprozessen regelmäßig auch eine Dokumentation über den gesamten Produktions- oder Einsatzzyklus bestimmter Objekte vorteilhaft oder sogar vorgeschrieben sein kann. Dies kann insbesondere auch die Entsorgung oder Wiederverwertung des Objekts nach Ende der regulären Verwertung betreffen. Im Ergebnis gibt es also bei einem nach einem additiven Fertigungsverfahren hergestellten Objekt eine ganze Reihe von elektronischen Daten aus potenziell ganz unterschiedlichen Quellen, welche über längere Zeit vorgehalten, in ihrer Gesamtheit mit dem Objekt verknüpft und über die gesamte Einsatzzeit des Objekts potenziell ergänzt werden sollten.

Es ist an sich bekannt, dass der Hersteller eines insbesondere komplexen Produkts jedem Exemplar dieses Produkts eine Seriennummer zuweist und in einer internen Datenbank die Herstellungsdaten sowie ggf. im Laufe der Verwendung hinzukommende Daten vorhält. Dies ist bei herkömmlich hergestellten Produkten - beispielsweise PKWs - deshalb akzeptabel, weil ein einzelnes Unternehmen als Hersteller des Produkts und damit als verantwortlich eindeutig identifizierbar ist und weil auch die Zulieferung von Subkomponenten - also von einzelnen Teilen des PKWs - an dieses Unternehmen im Wesentlichen in Form von körperlichen Komponenten erfolgt. Bei einem wie oben beschrieben verteilten Prozess bei einer additiven Fertigung ist es aber ungleich schwieriger, einen in diesem Sinne hauptverantwortlichen Hersteller zu identifizieren, da dem eigentlichen Herstellungsvorgang in einem 3D-Drucker häufig insgesamt eine geringere Bedeutung als der Konstruktion, der Definition der Ausgangsmaterialien und der Bereitstellung der Ausgangsmaterialien zukommt. Wenn hingegen jede der an der Herstellung des Objekts direkt oder indirekt beteiligten Parteien sowie die Abnehmer und Weiterverwerter die ihnen jeweils zugeordneten Daten separat und für sich gleichsam als eine Vielzahl von "Insellösungen" verwalten, dann ist ein verlässliches und Dokumentationsstandards entsprechendes Zusammenfügen dieser Daten sowohl aus technischer als auch aus organisatorischer Sicht schwierig.

Die als nächstkommend angesehene WO 2012/146943 A2 aus dem Stand der Technik beschreibt ein Verfahren zum Authentifizieren des Druckens eines dreidimensionalen (3D) Artikels auf einem 3D-Drucker gemäß einer 3D-Druckdatei, die ein dreidimensionales Design beschreibt. Das Verfahren umfasst: Empfangen einer Authentifizierungsanforderung von einem 3D-Druckserver, der dem 3D-Drucker zugeordnet ist, wobei die Anforderung eine eindeutige Designkennung umfasst, die einer 3D-Designdatei zugeordnet ist, und eine eindeutige 3D-Druckerkennung, die einem 3D-Drucker zugeordnet ist; Verwenden mindestens einer der empfangenen eindeutigen Kennungen, um auf eine verifizierende 3D-Designkennung und eine verifizierende 3D-Druckerkennung zuzugreifen, wobei die verifizierenden Kennungen gemäß einer zweiten Beziehung miteinander in Beziehung stehen; Erzeugen eines Authentifizierungssignals; Erhalten eines Entschlüsselungsschlüssels, der den empfangenen Kennungen als Antwort auf das Authentifizierungssignal zugeordnet ist; und Übertragen des Entschlüsselungsschlüssels an den 3D-Druckserver, um den 3D-Artikel auf dem 3D-Drucker zu authentifizieren und zu drucken. EP 3 226 165 A1, WO 2017/201489 A1 und WO 2018/165155 A1 sind nur unter Artikel 54(3) EPÜ relevant und betreffen verschiedene Verfahren zur Sicherung oder Authentifizierung von additiv gefertigten Objekten mittels einer Blockchain.

Vor diesem Hintergrund besteht die Aufgabe der Erfindung daher darin, eine technische Lehre bereitzustellen, welche es auch bei einem stark verteilten Prozess bei der additiven Fertigung eines Objekts erlaubt, auf transparente und manipulationssichere Art und Weise die Konstruktion, Produktion und Verwendung dieses Objekts prinzipiell beliebig umfassend zu verfolgen und nachzuhalten.

Diese Aufgabe wird jeweils gelöst durch ein Verfahren zur kryptologischen Sicherung eines additiven Fertigungsvorgangs mit den Merkmalen des Anspruchs 1, durch einen Datenstrang zur kryptologischen Sicherung eines additiven Fertigungsvorgangs mit den Merkmalen des Anspruchs 14 sowie durch ein System zur kryptologischen Sicherung eines additiven Fertigungsvorgangs mit den Merkmalen des Anspruchs 15.

Wesentlich für die Erfindung ist die Erkenntnis, dass alle wesentlichen Informationen zu einem additiv zu fertigendem bzw. gefertigtem Objekt in einem Datenstrang gebündelt werden können, dessen Elemente kryptologisch verkettet sind. Dies verhindert einerseits, dass in den Datenstrang einmal eingefügte Elemente nachträglich unbemerkt verändert werden und erlaubt es andererseits, den Datenstrang unter einer Vielzahl von Teilnehmern zu verteilen, sodass keine einzelne hauptsächlich oder ausschließlich für die Pflege des Datenstrangs zuständige Partei - ob nun unter den Teilnehmern oder extern - bestimmt werden muss. Es ist dann auch ohne weiteres möglich, dass einzelne Teilnehmer ausscheiden und neue Teilnehmer hinzukommen, ohne dass dies die Integrität des Datenstrangs infrage stellen würde.

Das vorschlagsgemäße Verfahren dient der kryptologischen Sicherung eines additiven Fertigungsvorgangs. Unter einem additiven Fertigungsvorgang ist dabei der gesamte Komplex an Vorgängen zu verstehen, welcher zu einer additiven Fertigung im oben beschriebenen Sinne gehört. Mit anderen Worten umfasst der additive Fertigungsvorgang nicht nur die additive Fertigung an sich - also den physikalischen Akt der Fertigung oder Herstellung eines Objekts - sondern auch die der Fertigung vorrangehende Definition des Objekts bzw. der Fertigung, der Fertigung nachfolgende Messungen am gefertigten Objekt sowie alle weiteren Vorgänge, die die weitere Nutzung des Objekts bis hin zur Entsorgung, Rezyklierung oder sonstigen Verwertung des Objekts betreffen.

Gemäß dem vorschlagsgemäßen Verfahren weist ein Datenstrang kryptologisch verkettete Elemente zur Beschreibung des Fertigungsvorgangs auf. Unter dem Begriff eines Datenstrangs ist eine grundsätzlich beliebige Abfolge der Elemente zu verstehen. Bei diesen Elementen handelt es sich um Daten zur Beschreibung des Fertigungsvorgangs gemäß dem oben beschriebenen, weiten Sinne. Die kryptologische Verkettung der Elemente bedeutet, dass die Integrität des Datenstrangs kryptologisch gesichert ist. Mit anderen Worten ist jede nachträgliche Veränderung oder Löschung eines der bereits bestehenden Elemente des Datenstrangs oder eine sonstige Änderung in deren Konstellation erkennbar. Diese kryptologische Verkettung kann in an sich beliebiger, aus dem Stand der Technik bekannter Art und Weise erfolgen, wobei untenstehend spezielle Beispiele für eine solche kryptologische Verkettung beschrieben werden.

Vorschlagsgemäß weisen die Elemente mindestens einen Definitionsdatensatz zur Definition eines Objekts für eine additive Fertigung auf. Mit anderen Worten ist jedes Element, welches die additive Fertigung im engeren Sinne auf eine grundsätzlich beliebige Art definiert, ein Definitionsdatensatz. Elemente, welche sich auf Sachverhalte nach Abschluss der additiven Fertigung im engeren Sinne beziehen, z. B. auf eine Qualitätsprüfung, sind demnach keine Definitionsdatensätze.

Vorschlagsgemäß definiert der mindestens eine Definitionsdatensatz das Objekt zumindest teilweise räumlich für die additive Fertigung und es definiert der mindestens eine Definitionsdatensatz ein Ausgangsmaterial des Objekts für die additive Fertigung.

Weiter wird vorschlagsgemäß der mindestens eine Definitionsdatensatz von einem jeweiligen Urheber in den Datenstrang eingefügt und die kryptologische Verkettung auf den mindestens einen Definitionsdatensatz ausgedehnt. Dabei kann die obige zumindest teilweise räumliche Definition des Objekts für die additive Fertigung und die Definition des Ausgangsmaterials des Objekts für die additive Fertigung prinzipiell beliebig auf den mindestens einen Definitionsdatensatz verteilt sein. So kann es sein, dass es nur einen einzelnen Definitionsdatensatz gibt, welcher sowohl zumindest teilweise räumliche Definition des Objekts für die additive Fertigung als auch die die Definition des Ausgangsmaterials des Objekts für die additive Fertigung umfasst.

Es kann aber auch sein, dass zwei Definitionsdatensätze vorhanden sind, von denen ein Geometriedatensatz das Objekt zumindest teilweise räumlich für die additive Fertigung definiert und ein separater Materialdatensatz ein Ausgangsmaterial des Objekts für die additive Fertigung definiert. Bei einer Vielzahl von Definitionsdatensätzen können sich diese Definitionen beliebig auf diese Definitionsdatensätzen verteilen. Bei dem Urheber des jeweiligen Definitionsdatensatzes kann es sich auch bei verschiedenen Definitionsdatensätzen um denselben Urheber handeln. Ebenso können unterschiedliche Urheber für Geometriedatensatz Definitionsdatensatz vorliegen.

Die Ausdehnung der kryptologischen Verkettung auf den mindestens einen Definitionsdatensatz bedeutet, dass die Elemente des Datenstrangs und insbesondere die eingefügten Definitionsdatensätze auch und insbesondere nach diesem Einfügen kryptologisch verkettet sind.

Die zumindest teilweise räumliche Definition des Objekts für die additive Fertigung kann sowohl Informationen zu einer Ausdehnung des Objekts in verschiedenen Dimensionen als auch zu einer Lage oder Ausrichtung des Objekts umfassen. Sie kann insbesondere durch eine von dem mindestens einen Definitionsdatensatz umfasste STL-Datei (STereoLithography, Standard Triangle Language oder Standard Tessellation Language) erfolgen. Ebenso kann die zumindest teilweise räumliche Definition des Objekts für die additive Fertigung eine Positionsangabe darüber umfassen, wo räumlich an einem bereits vorhandenen Halbzeug additiv zur Herstellung des fertigen Objekts gefertigt werden soll.

Die Definition des Ausgangsmaterials des Objekts betrifft insbesondere die Bestandteile und die Zusammensetzung des Objekts bei der additiven Fertigung, also insbesondere das bei der Fertigung additiv hinzugefügte Material, wobei hiervon auch solche Bestandteile umfasst sind, welche bei der additiven Fertigung nur vorübergehend verwendet werden und welche somit nach Abschluss der additiven Fertigung nicht mehr Bestandteil des hergestellten Objekts sind. Bei dem jeweiligen Urheber handelt es sich jeweils um grundsätzlich beliebige Personen oder Vorrichtungen, wie z. B. einen entsprechenden Computer.

Gemäß dem vorschlagsgemäßen Verfahren wird der Datenstrang über ein System von Computernetzwerken an eine Vorrichtung zur additiven Fertigung zur Herstellung des Objekts mittels der additiven Fertigung übertragen und die Integrität der kryptologischen Verkettung überprüft. Diese Überprüfung kann insbesondere durch die Vorrichtung zur additiven Fertigung erfolgen. Bei dem System von Computernetzwerken, welches also grundsätzlich beliebig weitreichend und insbesondere global sein kann, kann es sich insbesondere um das Internet handeln. Gemäß dem vorschlagsgemäßen Verfahren stellt die Vorrichtung zur additiven Fertigung basierend auf den Definitionsdatensätzen das Objekt mittels der additiven Fertigung her. Mit anderen Worten basiert die Herstellung des Objekts durch die Vorrichtung zur additiven Fertigung in jedem Falle auf dem mindestens einen Definitionsdatensatz.

Der Begriff der additiven Fertigung ist vorliegend weit zu verstehen, sodass jedwede Fertigungsschritte von dem Begriff umfasst sind, bei denen Stoff zur Herstellung des Objekts zugefügt wird. Einerseits umfasst dies den 3D-Druck im engeren Sinne. Andererseits sind aber auch Prozesse umfasst, bei denen der jeweilige Stoff auch einem bereits vorhandenen Rohling, einem Halbzeug oder einer sonstigen Vorkomponente zugefügt wird. So zählt auch das Auftragen einer Beschichtung wie etwa eines Lacks oder einer Verschleißschicht zu der additiven Fertigung. Ebenso kann es sein, dass durch 3D-Druck nur ein Teil eines Objekts und insbesondere nur eine Oberflächenstruktur additiv auf ein Halbzeug aufgetragen wird. Entsprechend kann es bei dieser additiven Fertigung durch die Vorrichtung zur additiven Fertigung sein, dass die additive Fertigung auf Komponenten aufbaut, welche bereits vorgefertigt wurden, und zwar ggf. auch durch eine andere und potenziell nicht-additive Fertigungsweise. Beispielsweise kann die additive Fertigung um eine herkömmlich gefertigte Elektronikkomponente erfolgt, welche dann etwa von dem additiv gefertigten Teil des hergestellten Objekts umschlossen ist.

Prinzipiell kann es sein, dass das obige Ausgangsmaterial des Objekts für die additive Fertigung und auch andere Merkmale des Objekts räumlich homogen in dem Objekt verteilt sind. Räumliche Definition und Ausgangsmaterial stehen dann in keinem speziellen Zusammenhang. Eine bevorzugte Ausführungsform des vorschlagsgemäßen Verfahrens ist hingegen dadurch gekennzeichnet, dass der mindestens eine Definitionsdatensatz für einen räumlichen Bereich des Objekts eine in Abhängigkeit einer räumlichen Position im Bereich variierende Eigenschaft des Objekts definiert. Mit anderen Worten ist die Eigenschaft eine Funktion der räumlichen Position im Bereich, welche nicht im gesamten Bereich konstant ist. Bei diesem räumlichen Bereich des Objekts kann es sich sowohl um einen Teilbereich des Objekts als auch um das Objekt insgesamt handeln. Auf diese Weise können gewünschte räumliche Inhomogenitäten des Objekts bei der additiven Fertigung berücksichtigt werden. Vorzugsweise handelt es sich bei der Eigenschaft des Objekts um eine funktionale Eigenschaft. Dazu kann ein Elastizitätsmodul, ein Temperaturkoeffizient, eine Dichte, eine Beständigkeit oder eine sonstige physikalische Eigenschaft zählen. Ebenso kann es sein, dass die Eigenschaft des Objekts eine Materialzusammensetzung ist. Bei einer solchen Eigenschaft kann es sich auch um das Vorhandensein oder Fehlen eines bestimmten Merkmals handeln. Alternativ oder zusätzlich kann es sein, dass die Eigenschaft des Objekts je Voxel des Bereichs definiert ist. Bei einem solchen Voxel handelt es sich um einen räumlichen Gitterpunkt in dreidimensionaler Analogie zu einem Pixel. Ebenso kann jedem Voxel auch ein insbesondere würfelförmiges Standardvolumenelement zugeordnet werden, sodass die Menge aller Voxel den Bereich im Wesentlichen vollständig ausfüllt.

Prinzipiell kann der mindestens eine Definitionsdatensatz beliebige Arten von Materialien definieren, welche für den 3D-Druck geeignet sind, so etwa auch Kunstharze, Keramiken oder Metalle. Eine bevorzugte Ausführungsform des vorschlagsgemäßen Verfahrens ist dadurch gekennzeichnet, dass der mindestens eine Definitionsdatensatz zur Definition des Ausgangsmaterials ein oder mehrere thermoplastische Materialien definiert. Bevorzugt definiert der mindestens eine Definitionsdatensatz für diese Materialien auch eine Teilchengröße und/oder einer Schmelzeigenschaft, umfassend Schmelzpunkt und/oder Schmelzbereich sowie Schmelzeviskosität. Ebenso kann der mindestens eine Definitionsdatensatz mindestens ein Fließmittel des Ausgangsmaterials definieren. Weiter kann es sein, dass die thermoplastischen Materialien, die Teilchengröße, die Schmelzeigenschaft und/oder das Fließmittel variierend für den räumlichen Bereich des Objekts in Abhängigkeit einer räumlichen Position im Bereich definiert ist.

Eine weitere bevorzugte Ausführungsform des vorschlagsgemäßen Verfahrens ist dadurch gekennzeichnet, dass der mindestens eine Definitionsdatensatz einen Fertigungsprozess des Objekts definiert. Die Definition des Fertigungsprozesses kann insbesondere die Art des Schichtaufbaus betreffen. So kann spezifiziert werden, wie fein oder grob die Schichten aufzutragen sind. Bevorzugt ist hier, dass der mindestens eine Definitionsdatensatz ein Verfahren zur Schmelzschichtung (Fused Filament Fabrication, FFF oder Fused Deposition Modeling, FDM), ein Selective Laser Sintering, ein Selective Laser Melting oder ein High Speed Sintering (HSS), ggf. mit den jeweils verbundenen Prozessparametern, als Fertigungsprozess des Objekts definiert.

Der Begriff "Schmelzschichtungsverfahren" bezeichnet ein Fertigungsverfahren aus dem Bereich der additiven Fertigung, mit dem ein Werkstück schichtweise beispielsweise aus einem schmelzfähigen Kunststoff aufgebaut wird. Der Kunststoff kann mit oder ohne weitere Zusätze wie Fasern eingesetzt werden. Maschinen für das FDM/FFF gehören zur Maschinenklasse der 3D-Drucker. Dieses Verfahren basiert auf der Verflüssigung eines drahtförmigen Kunststoff- oder Wachsmaterials durch Erwärmung. Beim abschließenden Abkühlen erstarrt das Material. Der Materialauftrag erfolgt durch Extrusion mit einer in Bezug auf eine Fertigungsebene frei verfahrbaren Heizdüse. Dabei kann entweder die Fertigungsebene fix sein und die Düse ist frei verfahrbar oder eine Düse ist fix und ein Substrattisch (mit einer Fertigungsebene) kann verfahren werden oder beide Elemente, Düse und Fertigungseben, sind verfahrbar. Die Geschwindigkeit mit der Untergrund und Düse zueinander verfahrbar sind liegt bevorzugt in einem Bereich von 1 bis 200 mm/s. Die Schichtdicke liegt je nach Anwendungsfall in einem Bereich von 0,025 und 1,25 mm, der Austrittsdurchmesser des Materialstrahls (Düsenauslassdurchmesser) von der Düse beträgt typischerweise mindestens bei 0,05 mm.

Bei der schichtweisen Modellherstellung verbinden sich damit die einzelnen Schichten zu einem komplexen Teil. Der Aufbau eines Körpers erfolgt üblich indem wiederholt, jeweils zeilenweise eine Arbeitsebene abgefahren wird (Bildung einer Schicht) und dann die Arbeitsebene "stapelnd" nach oben verschoben wird (Bilden mindestens einer weiteren Schicht auf der ersten Schicht), sodass eine Form schichtweise entsteht. Die Austrittstemperatur der Stoffmischungen aus der Düse kann beispielsweise 80 °C bis 420 °C betragen. Es ist zudem möglich, den Substrattisch und/oder einen gegebenenfalls vorhandenen Bauraum zu beheizen, beispielsweise auf 20 °C bis 250 °C. Hierdurch kann ein zu schnelles Abkühlen der aufgetragenen Schicht verhindert werden, sodass eine weitere, hierauf aufgetragene Schicht sich ausreichend mit der ersten Schicht verbindet.

Sinterverfahren sind im Kontext der vorliegenden Erfindung Verfahren, welche insbesondere thermoplastische Pulver nutzen, um Gegenstände schichtweise aufzubauen. Hierbei werden über einen so genannten Beschichter dünne Pulverschichten aufgetragen und anschließend mittels einer Energiequelle selektiv aufgeschmolzen. Das umgebende Pulver stützt dabei die Bauteilgeometrie. Komplexe Geometrien sind dadurch wirtschaftlicher zu fertigen als beim FDM-Verfahren. Zudem können verschiedene Gegenstände eng gepackt im so genannten Pulverbett angeordnet beziehungsweise gefertigt werden. Aufgrund dieser Vorteile gelten pulverbasierte additive Fertigungsverfahren zu den wirtschaftlichsten additiven Herstellungsverfahren am Markt. Sie werden daher überwiegend von industriellen Nutzern verwendet. Beispiele für pulverbasierte additive Fertigungsverfahren sind das sogenannte Lasersintern (SLS, Selective Laser Sintering) oder das High Speed Sintering (HSS). Sie unterscheiden sich untereinander in der Methode, um die Energie für das selektive Aufschmelzen in den Kunststoff einzutragen. Beim Lasersinterverfahren erfolgt der Energieeintrag über einen gelenkten Laserstrahl. Beim so genannten High Speed Sintering (HSS)-Verfahren erfolgt der Energieeintrag über Infrarot (IR)-Strahler in Kombination mit einem selektiv in das Pulverbett gedruckten IR-Absorber. Das so genannte Selective Heat Sintering (SHS) nutzt die Druckeinheit eines konventionellen Thermodruckers, um thermoplastische Pulver selektiv aufzuschmelzen. Bevorzugt sind selektive Lasersinterverfahren (SLS).

Eine bevorzugte Ausführungsform des vorschlagsgemäßen Verfahrens ist dadurch gekennzeichnet, dass die Elemente jeweils digital signiert sind. Digitale Signaturen sind ebenfalls aus dem Stand der Technik bekannt und stellen ein asymmetrisches Kryptosystem dar, durch welches die nichtabstreitbare Urheberschaft sowie die Integrität der digital signierten Daten, hier also jedes einzelnen Elements, geprüft werden kann. Vorliegend ist jedes Element durch den jeweiligen Urheber des Elements digital signiert. Bevorzugt ist es, dass der jeweilige Urheber den mindestens einen Definitionsdatensatz beim Einfügen digital signiert. Weiter kann es sein, dass bei der Überprüfung der Integrität der kryptologischen Verkettung die digitalen Signaturen überprüft werden, und zwar insbesondere durch die Vorrichtung zur additiven Fertigung.

Grundsätzlich ist bei dem Datenstrang keine Sortierung der Elemente erforderlich. Doch ist eine bevorzugte Ausführungsform des vorschlagsgemäßen Verfahrens dadurch gekennzeichnet, dass die Elemente des Datenstrangs gemäß einer Reihenfolge sortiert sind. Grundsätzlich kann dabei zunächst die Grundlage für die Sortierung beliebig sein. Bevorzugt ist dabei jedoch, dass die Elemente des Datenstrangs einen jeweiligen Zeitstempel zum Zeitpunkt der Erstellung des jeweiligen Elements aufweisen und dass die Reihenfolge, gemäß der die Elemente des Datenstrangs sortiert sind, der zeitlichen Reihenfolge gemäß der jeweiligen Zeitstempel entsprechen. Solche Zeitstempel können jeweils die Angabe einer absoluten Zeit umfassen, wobei es sich insbesondere um die Angabe einer globalen Zeit handeln kann, beispielsweise die insbesondere in der Luftfahrt gebräuchliche koordinierte Weltzeit UTC. Es kann aber auch sein, dass die Zeitstempel lediglich der relativen zeitlichen Ordnung der Erstellung der Elemente dienen. Daher reicht es etwa aus, dass die Zeitstempel nur darüber Aufschluss darüber geben, welcher Zeitstempel früher oder später als ein anderer Zeitstempel ist und insoweit keine Angabe über die Länge des jeweiligen zeitlichen Abstands zwischen den Zeitstempeln machen. Gemäß einer bevorzugten Ausführungsform des vorschlagsgemäßen Verfahrens ist vorgesehen, dass die Elemente des Datenstrangs dadurch kryptologisch verkettet sind, dass der Datenstrang für zumindest einige, vorzugsweise alle, Elemente einen kryptologischen Element-Hashwert des jeweiligen Elements aufweist und dass der Datenstrang eine Reihe von kryptologischen Meta-Hashwerten aufweist, welche jeweils auf einem Element-Hashwert basieren. Das bedeutet, dass der Element-Hashwert zumindest einen Teil der Ausgangsdaten bei der Berechnung des jeweiligen Meta-Hashwerts bildet. Daneben kann es auch weitere kryptologische Meta-Hashwerte geben, welche auf Meta-Hashwerten basieren. Solche weiteren Meta-Hashwerte können durch Anwendung einer Hashfunktion auf zwei oder mehr Meta-Hashwerte gebildet werden, sodass die resultierende Struktur der Meta-Hashwerte einem an sich aus dem Stand der Technik bekannten Hashbaum entspricht, welcher auch als "merkle tree" bezeichnet wird.

Weiter ist es bevorzugt, dass die Meta-Hashwerte eine verkette Liste bilden, wobei die Meta-Hashwerte auf einem jeweiligen Element-Hashwert und einem in der Liste vorangehenden Meta-Hashwert basieren. Dabei kann jeder Meta-Hashwert einem Element zugeordnet sein und es kann jedem Meta-Hashwert ein anderer Meta-Hashwert als vorangehender Meta-Hashwert zugeordnet sein. Speziell kann für einen bestimmten Meta-Hashwert dieser vorangehende Meta-Hashwert derjenige Meta-Hashwert sein, welcher dem Element zugeordnet ist, das gemäß der obigen Sortierung der Elemente dem Element vorangeht, dem der bestimmte Meta-Hashwert zugeordnet ist. Mit anderen Worten entspricht die Reihenfolge der verketten Liste der Meta-Hashwerte gemäß der Zuordnung der vorangehenden Meta-Hashwerte der Reihenfolge, in welcher die Elemente sortiert sind. Dabei kann einem ersten Meta-Hashwert der Liste ein Initialwert, welcher keinem Element zugeordnet ist, als vorangehender Meta-Hashwert zugeordnet sein kann. Damit wird dem Umstand Rechnung getragen, dass auch die Reihenfolge der Elemente gemäß Sortierung ein erstes Element kennt, welchem kein anderes Element vorangeht. Durch das Bilden einer solchen verketteten Liste kann der Datenstrang daraufhin überprüft werden, ob eine nachträgliche Manipulation der Elemente des Datenstrangs stattfand, und zwar einschließlich einer Änderung innerhalb eines Elements als auch eines Entfernens oder Einfügens eines ganzen Elements oder einer sonstigen Änderung der Reihenfolge der Elemente.

Ferner kann es sein, dass die Element-Hashwerte und/oder der mindestens eine Meta-Hashwert auf einer schlüsselabhängigen Hashfunktion basieren. Bei einem Datenstrang mit einer großen Zahl von Elementen kann dadurch der Rechenaufwand für die Überprüfung der Integrität verringert werden.

Eine weitere bevorzugte Ausführungsform des vorschlagsgemäßen Verfahrens ist dadurch gekennzeichnet, dass eine Vielzahl von Bearbeitern umfassend die jeweiligen Urheber des mindestens einen Definitionsdatensatzes (3a-c) ein neues Element in den Datenstrang einfügt - wobei vorzugsweise beim Einfügen des neuen Elements der einfügende Bearbeiter das neue Element digital signiert - und dass die kryptologische Verkettung der Elemente auf das neue Element ausgedehnt wird. Neben den Urhebern können auch weitere Bearbeiter vorhanden sein, welche auf diese Weise den Datenstrang erweitern. Bei den Bearbeitern in diesem Sinne handelt es sich vorzugsweise um Computer oder Rechenvorrichtungen.

Ein solcher Bearbeiter könnte beispielsweise einen Definitionsdatensatz zur Definition einer Tolerierung der additiven Fertigung des Objekts hinzufügen. Ebenso könnte ein Bearbeiter, welcher ein Besteller ist, eine Bestellung für ein Exemplar des durch den Datenstrang beschriebenen Objekts als Element in den Datenstrang einfügen. Indem jedes eingefügte Element vorzugsweise digital signiert wird und kryptologisch verkettet wird, bleibt der entsprechende Vorgang dokumentiert sowie gesichert und kann nachverfolgt werden. Hier ist weiter bevorzugt, dass das eingefügte neue Element als letztes Element der Reihenfolge eingefügt wird. Mit anderen Worten bleibt die Reihenfolge der bereits im Datenstrang vorhandenen Elemente untereinander gewahrt.

Gemäß einer bevorzugten Ausführungsform des vorschlagsgemäßen Verfahrens ist vorgesehen, dass nach Einfügen eines neuen Elements der Datenstrang über das System von Computernetzwerken an eine Vielzahl von Teilnehmern, vorzugsweise umfassend die Bearbeiter, übertragen und jeweils hinterlegt wird. Auf diese Weise kann jeder aktuelle Datenstrang mit seiner Historie verglichen werden. Die möglichst große Zahl von Teilnehmer ermöglicht eine umfassende Dokumentation und Kontrolle. Dabei ist es nicht erforderlich, dass die empfangenden Teilnehmer auch selbst zum Einfügen neuer Elemente befugt sind. Vorzugsweise erfolgt das obige Übertragen sogar nach jedem Einfügen eines neuen Elements. Bevorzugt ist weiter, dass die Integrität der kryptologischen Verkettung und vorzugsweise auch der digitalen Signaturen von der Vielzahl von Teilnehmern überprüft wird. Weiter kann es sein, dass bei einem Feststellen einer fehlenden Integrität der feststellende Teilnehmer eine Warnmitteilung an die Vielzahl von Teilnehmern sendet. Als besonders sichere Ausgestaltung einer solchen verteilten Kontrolle sieht eine bevorzugte Variante vor, dass die Vielzahl von Teilnehmern eine verteile Datenbank bildet, welche den Datenstrang als Blockchain verwaltet. Eine solche Blockchain ist an sich aus dem Stand der Technik bekannt und wird etwa bei der Kryptowährung Bitcoin eingesetzt.

Eine bevorzugte Ausführungsform des vorschlagsgemäßen Verfahrens ist dadurch gekennzeichnet, dass die Vielzahl von Bearbeitern die Vorrichtung zur additiven Fertigung umfasst und dass die Vorrichtung zur additiven Fertigung nach Herstellung des Objekts einen Herstellungsdatensatz mit Informationen zum Vorgang der Herstellung des Objekts als neues Element in den Datenstrang einfügt. Da es sich um ein Einfügen durch einen Bearbeiter handelt, erfolgt auch hier eine Ausdehnung der kryptologischen Verkettung auf das neue Element. Solche Informationen zum Vorgang der Herstellung des Objekts können etwa die für die Herstellung benötige Zeit, den Ort der Herstellung, während der Herstellung gemessene Sensordaten, potenziell während der Herstellung aufgetretene Fehlermeldungen sowie Einstellungen der Vorrichtung zur additiven Fertigung während der Herstellung umfassen. Bevorzugt ist, dass der Herstellungsdatensatz auch eine eindeutige Kennung des hergestellten Objekts aufweist. Bei dieser Kennung kann es sich etwa um eine Seriennummer handeln. Mit dem Begriff des hergestellten Objekts ist das spezielle Exemplar des Objekts gemeint. Wird ein weiteres, gleiches Objekt hergestellt, so handelt es sich zwar um das gleiche Objekt, aber um ein anderes bzw. weiteres Exemplar des Objekts und damit nicht um das selbe hergestellte Objekt.

Eine weitere bevorzugte Ausführungsform des vorschlagsgemäßen Verfahrens ist dadurch gekennzeichnet, dass die Vielzahl von Bearbeitern eine Vielzahl von Vorrichtungen zur additiven Fertigung umfasst, welche jeweils entfernt zueinander und durch das System von Computernetzwerken miteinander verbunden angeordnet sind und welche jeweils basierend auf den Definitionsdatensätzen ein jeweiliges Objekt mittels der additiven Fertigung herstellen. Auf diese Weise kann also an unterschiedlichen Orten und damit dezentral das gleiche Objekt in mehreren Exemplaren hergestellt werden, wodurch gegenüber einer zentralen Herstellung das Erfordernis eines entsprechenden Transports der hergestellten Produkte entfällt oder zumindest gemildert wird. Weiter ist es bevorzugt, dass die Vielzahl von Vorrichtungen zur additiven Fertigung nach Herstellung des jeweiligen Objekts einen jeweiligen Herstellungsdatensatz mit Informationen zum Vorgang der Herstellung des jeweiligen Objekts, vorzugsweise mit einer eindeutigen Kennung des jeweiligen hergestellten Objekts, als jeweilig neues Element in den Datenstrang einfügen. Die jeweils an verteilten Standorten erfolgte Herstellung wird also dennoch in demselben gemeinsamen Datenstrang dokumentiert. Auf diese Weise kann die Herstellung aller Exemplare des definierten Objekts nachvollzogen werden.

Gemäß einer bevorzugten Ausführungsform des Verfahrens ist vorgesehen, dass bei der Herstellung des Objekts durch die Vorrichtung zur additiven fertigung die eindeutige Kennung des hergestellten Objekts in das Objekt eingebracht wird, sodass die Kennung aus dem hergestellten Objekt ausgelesen werden kann. Mit anderen Worten wird die dem hergestellten Objekt zugeordnete Kennung auch physisch in das hergestellte Objekt eingebracht, sodass die Zuordnung des hergestellten Objekts zu dem Herstellungsdatensatz durch Untersuchung des hergestellten Objekts erfolgen kann. Grundsätzlich gibt es für ein solches Einbringen verschiedene Möglichkeiten. Das Einbringen der Kennung selbst im engeren Sinne kann dabei auch auf andere Weise als durch ein additives Fertigungsverfahren erfolgen. So könnte etwa die additive Fertigung des Objekts um einen vorhandenen RFID-Chip oder eine vergleichbare Vorrichtung mit der Kennung herum erfolgen. Auf diese Weise wäre beispielsweise der RFID-Chip im Inneren des im Übrigen additiv hergestellten Objekts angeordnet. Denkbar wäre aber auch, dass die Kennung selbst mittels der additiven Fertigung eingebracht wird. Dies könnte etwa durch das Einschreiben einer Seriennummer beim 3D-Druck erfolgen. Weiter kann es sein, dass die Informationen zum Vorgang der Herstellung des Objekts während der Herstellung des Objekts gemessene Prozessmessinformationen und/oder nach der Herstellung des Objekts am hergestellten Objekt gemessene Objektmessinformationen umfassen. Solche Messungen können z. B. die letztendlichen Maße des hergestellten Objekts oder bei der Fertigung gemessene Temperaturen oder Wartezeiten umfassen. Insofern kann sich eine Überschneidung oder Überlappung zu den obigen Informationen zum Vorgang der Herstellung des Objekts ergeben.

Eine bevorzugte Ausführungsform des vorschlagsgemäßen Verfahrens ist dadurch gekennzeichnet, dass die Vielzahl von Bearbeitern eine Prüfvorrichtung zur Prüfung des hergestellten Objekts aufweist, dass die Prüfvorrichtung einen Prüfvorgang am hergestellten Objekt unter Messung von Prüfwerten durchführt und dass die Prüfvorrichtung nach Durchführung des Prüfvorgangs einen Prüfdatensatz mit den gemessenen Prüfwerten als neues Element in den Datenstrang einfügt. Unter einer solchen Prüfung des hergestellten Objekts kann jede der eigentlichen Herstellung nachgelagerte Prüfung mit entsprechenden Messungen verstanden werden, so etwa eine herkömmliche Ausgangs- oder Qualitätskontrolle, wie sie aus der Fertigung seit langem bekannt ist. Prinzipiell kann dabei die Prüfvorrichtung auch identisch zu der Vorrichtung zur additiven Fertigung sein. Ebenso kann die Prüfvorrichtung auch separat von der Vorrichtung zur additiven Fertigung und entfernt zu dieser angeordnet sein. Bevorzugt ist weiter, dass der Prüfvorgang basierend auf einer Prüfvorgabe durchgeführt wird, welche Prüfvorgabe als Element von dem Datenstrang umfasst ist. Vorzugsweise wurde diese Prüfvorgabe von einem anderen Bearbeiter als der Prüfvorrichtung eingefügt.

Eine weitere bevorzugte Ausführungsform des vorschlagsgemäßen Verfahrens ist dadurch gekennzeichnet, dass die Vielzahl von Bearbeitern einen Anforderungsgeber umfasst, welcher zeitlich vor dem Einfügen des mindestens einen Definitionsdatensatzes ein Anforderungsprofil mit einer Anwendungsspezifikation für das Objekt als neues Element in den Datenstrang einfügt. Dies erlaubt es, nicht nur den Entwurfs- und Herstellungsprozess verteilt auszuführen und gleichzeitig verteilt aber vereinigt nachzuhalten, sondern diesen Ansatz auch auf die Vorstufe, nämlich die Formulierung einer Anforderung auszudehnen. Hier ist es bevorzugt, dass der Urheber basierend auf dem Anforderungsprofil den mindestens einen Definitionsdatensatz erstellt. Bevorzugt ist ebenso, dass das Anforderungsprofil die obige Prüfvorgabe umfasst.

Grundsätzlich können basierend auf dem mindestens einen Definitionsdatensatz beliebig viele Exemplare des Objekts hergestellt werden. Es kann aber auch sinnvoll oder gewünscht sein, die Zahl der hergestellten Objekte zu begrenzen. Daher ist gemäß einer bevorzugten Ausführungsform des vorschlagsgemäßen Verfahrens vorgesehen, dass der Datenstrang ein Element mit einem Chargendatensatz umfasst, welcher Chargendatensatz eine maximale Anzahl von basierend auf dem mindestens einen Definitionsdatensatz herzustellenden Objekten definiert. Ein solcher Chargendatensatz kann dann auf unterschiedliche Art und Weise berücksichtigt werden. Eine Möglichkeit sieht dabei vor, dass die Vorrichtung zur additiven Fertigung und insbesondere die Vielzahl der Vorrichtungen zur additiven Fertigung das - insbesondere jeweilige - Objekt nur herstellen, wenn die Zahl der hergestellten Objekte gemäß den Herstellungsdatensätzen in dem Datenstrang kleiner als die definierte maximale Anzahl ist. Insbesondere kann die Vorrichtung zur additiven Fertigung dazu eingerichtet, eine solche Überprüfung vorzunehmen und erst nach der Überprüfung das Objekt herzustellen. Dabei kann die Zahl der hergestellten Objekte der Zahl der Herstellungsdatensätze entsprechen. Ebenso kann es sein, dass ein Herstellungsdatensatz mehrere hergestellte Objekte betrifft und daher ebenso vielen hergestellten Objekten entspricht.

Neben der oben bereits beschriebenen kryptologischen Verkettung und der jeweiligen digitalen Signatur können noch weitere kryptologischen Maßnahmen im Zusammenhang mit dem Datenstrang vorgesehen sein. So kann es etwa sein, dass einige oder alle Elemente des Datenstrangs jeweils verschlüsselt sind. Ebenso kann es sein, dass der Datenstrang insgesamt verschlüsselt ist.

Die oben beschriebenen verschiedenen Arten von Bearbeitern oder Teilnehmern können teilweise auch in einer einzelnen Vorrichtung verwirklicht sein. So kann es sich insbesondere bei den jeweiligen Urhebern verschiedener Elemente oder Definitionsdatensätze um eine einzelne und gemeinsame Vorrichtung handeln. Entsprechend sind auch andere Kombinationen möglich.

Der vorschlagsgemäße Datenstrang dient der kryptologischen Sicherung eines additiven Fertigungsvorgangs, wobei der Datenstrang kryptologisch verkettete Elemente zur Beschreibung des Fertigungsvorgangs aufweist. Gemäß dem vorschlagsgemäßen Datenstrang weisen Elemente mindestens einen Definitionsdatensatz zur Definition eines Objekts für eine additive Fertigung auf, welcher mindestens eine Definitionsdatensatz das Objekt zumindest teilweise räumlich für die additive Fertigung definiert und ein Ausgangsmaterials des Objekts für die additive Fertigung definiert und wobei der mindestens eine Definitionsdatensatz dazu eingerichtet ist, dass eine Vorrichtung zur additiven Fertigung basierend auf dem mindestens einen Definitionsdatensatz das Objekt mittels der additiven Fertigung herstellt.

Das vorschlagsgemäße System zur kryptologischen Sicherung eines additiven Fertigungsvorgangs weist einen jeweiligen Urheber zum Einfügen mindestens eines Definitionsdatensatzes zur Definition eines Objekts für eine additive Fertigung in einen Datenstrang mit kryptologisch verketteten Elementen zur Beschreibung des Fertigungsvorgangs auf, wobei der mindestens eine Definitionsdatensatz das Objekt zumindest teilweise räumlich für die additive Fertigung definiert und ein Ausgangsmaterial des Objekts für die additive Fertigung definiert. Ferner weist das vorschlagsgemäße System eine Vorrichtung zur additiven Fertigung zur Herstellung des Objekts mittels der additiven Fertigung basierend auf dem mindestens einen Definitionsdatensatz und ein System von Computernetzwerken zur Übertragung des Datenstrangs an die Vorrichtung zur additiven Fertigung auf, wobei die Vorrichtung zur additiven Fertigung zur Prüfung der Integrität der kryptologischen Verkettung eingerichtet ist.

Bevorzugte Merkmale, Vorteile und Ausgestaltungen des vorschlagsgemäßen Datenstrangs sowie des vorschlagsgemäßen Systems ergeben sich jeweils aus den Merkmalen, Vorteilen und Ausgestaltungen bevorzugter Ausführungsformen des vorschlagsgemäßen Verfahrens und umgekehrt.

Weitere Einzelheiten, Merkmale, Ziele und Vorteile der vorliegenden Erfindung werden nachfolgen anhand der nur ein Ausführungsbeispiel wiedergebenden Zeichnung erläutert. In der Zeichnung zeigt
- Fig. 1: schematisch ein Ausführungsbeispiel eines vorschlagsgemäßen Systems, welches zur Ausführung des vorschlagsgemäßen Verfahrens eingerichtet ist,
- Fig. 2: schematisch ein Ausführungsbeispiel eines vorschlagsgemäßen Datenstrangs für das System der Fig. 1 und
- Fig. 3: schematisch ein in dem System der Fig. 1 hergestelltes Objekt mit einer je Voxel des räumlichen Bereichs des Objekts definierten Eigenschaft.

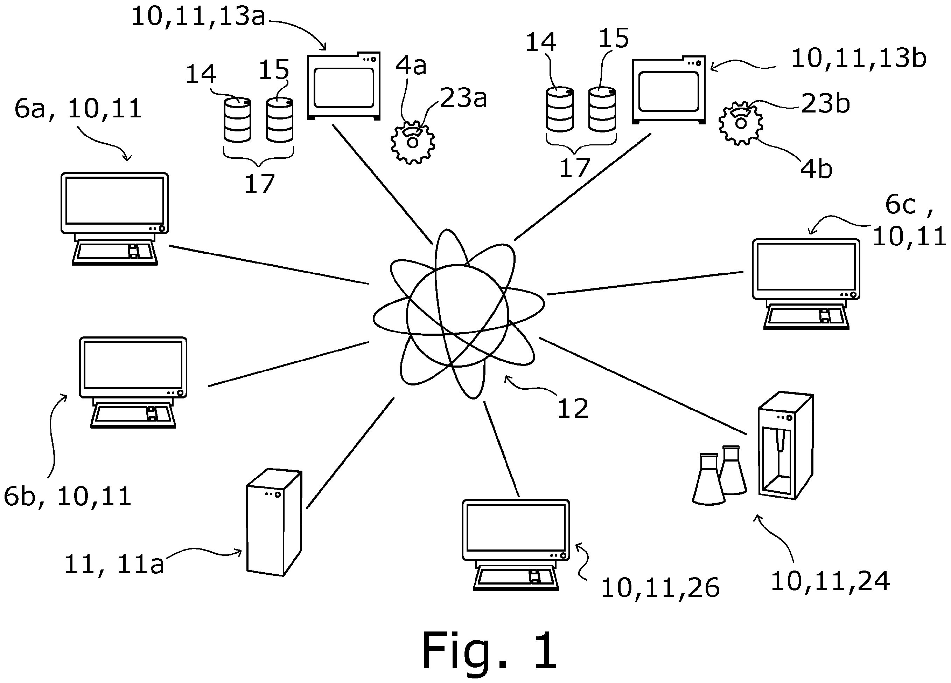

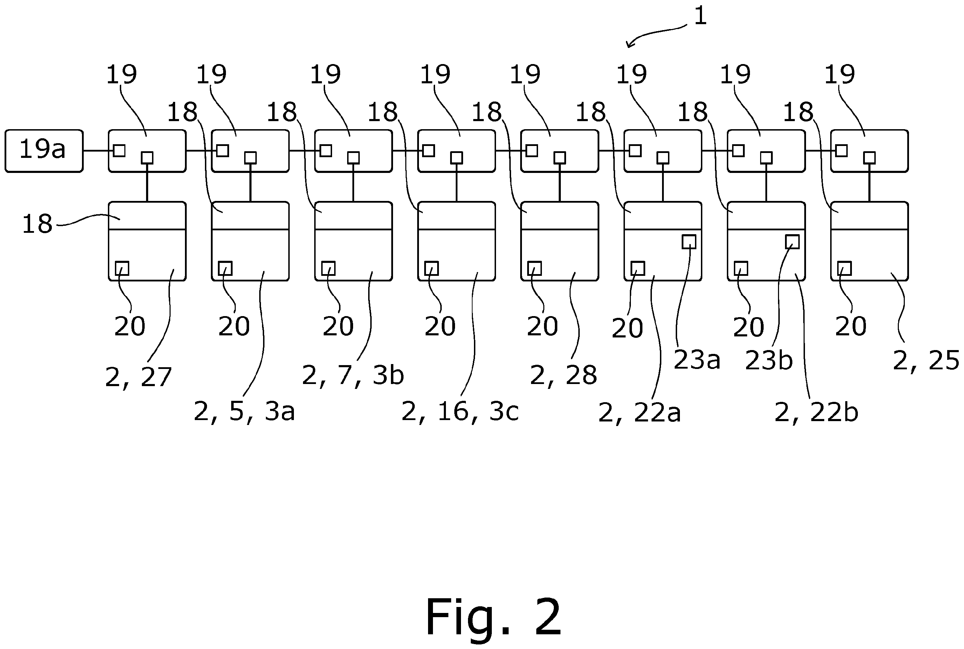

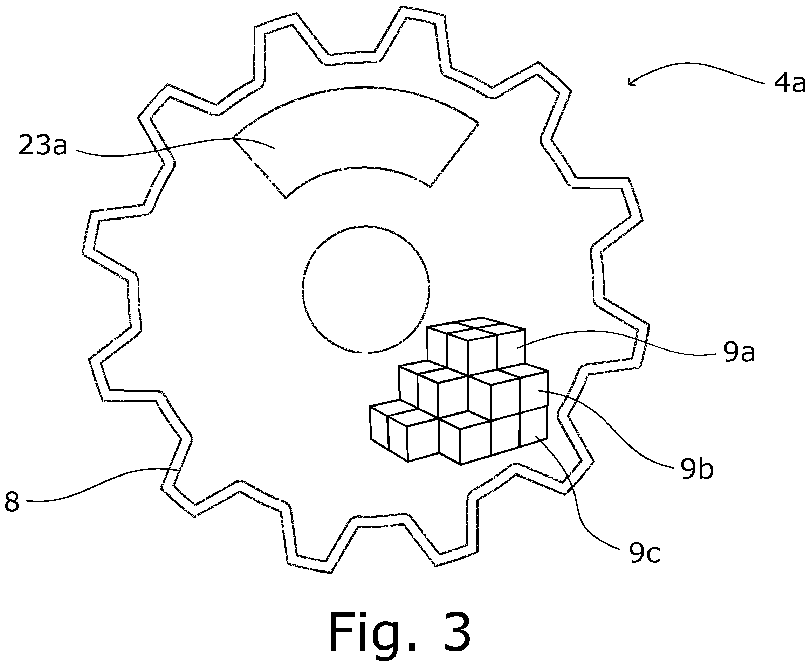

Das in der Fig. 1 dargestellte System dient der kryptologischen Sicherung eines additiven Fertigungsvorgangs. Speziell geht es um Herstellung eines Objekts 4a, b, bei welchem es sich hier beispielhaft um ein Zahnrad handelt und welches schematisch in der Fig. 3 dargestellt ist, mittels additiver Fertigung. Das System beruht dabei wesentlich auf dem in der Fig. 2 dargestellten Datenstrang 1. Dieser Datenstrang weist eine Vielzahl von Elementen 2 auf, welche miteinander kryptologisch verkettet sind. Ebenso sind die Elemente 2 in einer Reihenfolge angeordnet, welcher der Abfolge der Elemente 2 von links nach rechts in der Darstellung der Fig. 2 entspricht.

Bei dem gemäß dieser Reihenfolge zweiten Element 2 handelt es sich um einen Geometriedatensatz 5, welcher das Objekt 4a, b räumlich definiert. Da dieser Geometriedatensatz 5 das Objekt 4a, b für die additive Fertigung definiert, handelt es sich um einen Definitionsdatensatz 3a. Auch bei dem dritten Element 2 gemäß dieser Reihenfolge handelt es sich um einen Definitionsdatensatz 3b, und zwar speziell um einen Materialdatensatz 7, welcher das Ausgangsmaterial 17 des Objekts 4a, b definiert. Der Geometriedatensatz 5 sowie der Materialdatensatz 7 wurden jeweils von einem Urheber 6a, b,, bei welchen es sich gemäß der Darstellung in der Fig. 1 jeweils um einen Computer handelt, in den Datenstrang 1 eingefügt und mit dem übrigen Datenstrang 1 kryptologisch verkettet. Ebenso wurde der Geometriedatensatz 5 von seinem Urheber 6a sowie der Materialdatensatz 7 von seinem Urheber 6b digital signiert, und zwar so wie alle Elemente 2 des Datenstrangs 1 von ihrem jeweiligen digitalen Urheber digital signiert wurden.

Dabei wurde der Materialdatensatz 7 zeitlich nach dem Geometriedatensatz 5 erstellt und in den Datenstrang 1 eingefügt. Der Materialdatensatz 7 definiert dabei das Ausgangsmaterial 17 nicht homogen für das Objekt 4a, b, sondern sieht hier beispielhaft eine unterschiedliche Aushärtung des Ausgangsmaterials 17 in einem räumlichen Bereich 8 des Objekts 4a, b vor, wobei dieser räumliche Bereich 8 vorliegend das Objekt 4a, b insgesamt erfasst. Speziell definiert der Materialdatensatz eine stärkere Aushärtung, eine mittlere Aushärtung und eine geringere Aushärtung als jeweilige Eigenschaft 9a-c des Objekts 4a, b, welche für jeden Voxel im räumlichen Bereich 8 des Objekts 4a, b individuell definiert ist. Die Fig. 3 zeigt dies beispielhaft für einige Voxel und die entsprechenden Eigenschaften 9a-c des Objekts 4a.

Der Austausch des Datenstrangs 1 zwischen den Bearbeitern 10 - bei welchen es sich um diejenigen insbesondere Computer handelt, welche dazu berechtigt sind, neue Elemente 2 in den Datenstrang 1 einzufügen - sowie mit den Teilnehmern 11, welche Gruppe neben den Bearbeitern 10 auch diejenigen umfasst, die den Datenstrang 1 lediglich empfangen und ggf. auf kryptologische Integrität prüfen, erfolgt über ein System von Computernetzwerken 12. Die Teilnehmer 11 - und damit auch die Bearbeiter 10 - sind allesamt an weltweit verteilten Standorten angeordnet. Bei dem in der Zeichnung dargestellten Ausführungsbeispiel ist dieses System von Computernetzwerken 12 das Internet. Und zwar erfolgt nach jedem Einfügen eines neuen Elements 2 durch einen beliebigen Bearbeiter 10 eine Übertragung des auf diese Weise erweiterten Datenstrangs 1 an alle übrigen Teilnehmer 11 und damit auch an alle übrigen Bearbeiter 10. Der übertragene Datenstrang 1 wird dann von dem jeweils empfangenden Teilnehmer 11 hinterlegt. Der Vorgang des Einfügens selbst schließt stets eine digitale Signatur des Elements 2 sowie eine Ausdehnung der kryptologischen Verkettung auf das neue Element 2 ein, welche für das Ausführungsbeispiel der Fig. 1 untenstehend genauer beschrieben wird. In der Fig. 1 ist beispielhaft ein Datenbankserver 11a als Teilnehmer 11 dargestellt, welcher zwar jeweils den Datenstrang 1 empfängt und hinterlegt, aber nicht zum Einfügen neuer Elemente 2 in den Datenstrang 1 berechtigt oder eingerichtet ist.

Zu den Bearbeitern 10 gehört neben den obigen Urhebern 6a, b des Geometriedatensatzes 5 und des Materialdatensatzes 7 ebenso der weitere Urheber 6c, welcher als dem Materialdatensatz 7 nachfolgendes Element 2 einen Prozesstechnikdatensatz 16 mit Einzelheiten zum Schichtaufbau, bei welchem es sich ebenfalls um einen Definitionsdatensatz 3c handelt, bei der additiven Fertigung digital signiert und in den Datenstrang 1 eingefügt hat.

Der Geometriedatensatz 5, der Materialdatensatz 7 und der Prozesstechnikdatensatz 16 wurden basierend auf einem Anforderungsprofil 27 erstellt, welches zeitlich vor diesen Definitionsdatensätzen 3a-c von einem als Anforderungsgeber 26 bezeichneten Bearbeiter 10 erstellt und als erstes Element 2 des Datenstrangs 1 eingefügt wurde. Dieses Anforderungsprofil 27 spezifiziert die Erfordernisse, welchen das Objekt 4a, b genügen soll und bildet daher die Grundlage sowohl für die Geometrie des Objekts 4a, b als auch für seine Materialeigenschaften.

Zu den Bearbeitern 10 gehören ferner zwei Vorrichtungen zur additiven Fertigung 13a, b, bei welchen es sich vorliegend jeweils um einen 3D-Drucker handelt und welche ein jeweiliges Objekt 4a, b, definiert durch die Gesamtheit der Definitionsdatensätze 3a-c in dem Datenstrang 1, mittels additiver Fertigung herstellen. Das entsprechende, durch den Materialdatensatz 7 definierte Ausgangsmaterial 17 umfassend thermoplastische Materialien 14 sowie ein Fließmittel 15 ist jeweils an einer Vorrichtung zur additiven Fertigung 13a, b ebenfalls dargestellt. Zunächst hat eine erste der Vorrichtungen zur additiven Fertigung 13a ein erstes Objekt 4a basierend auf den Definitionsdatensätzen 3a-c hergestellt und daraufhin einen ersten Herstellungsdatensatz 22a, welcher in der Fig. 2 als Teil des Datenstrangs 1 dargestellt ist, erzeugt und in den Datenstrang 1 eingefügt. Dieser Herstellungsdatensatz 22a umfasst neben Informationen zum vollzogenen Herstellungsvorgang wie Prozessmessinformationen eine eindeutige Kennung 23a des Objekts 4a, welche Kennung 23a ebenso körperlich Bestandteil des Objekts 4a ist, beispielsweise durch Vorsehen eines entsprechenden RFID-Chips. Anschließend hat die zweite Vorrichtung zur additiven Fertigung 13b ein zweites Objekt 4b sinngemäß gleich mit einem zweiten Herstellungsdatensatz 22b und einer weiteren eindeutigen Kennung 23b hergestellt. Mittels der jeweiligen Kennung 23a, b lassen sich die Herstellungsdatensätze 22a, b den Objekten 4a, b zuordnen.

Der Datenstrang 1 umfasst auch ein Element 2, welches einen Chargendatensatz 28 umfasst und hier speziell aus dem Chargendatensatz 28 besteht. Vorliegend wurde dieser Chargendatensatz 28 als Element 2 neben dem Geometriedatensatz 5 von dem entsprechenden Urheber 6a eingefügt. Dieser Chargendatensatz 28 legt die maximale Anzahl der gemäß der Definitionsdatensätze 3a-c herzustellenden Objekte 4a, b fest. Die Vorrichtungen zur additiven Fertigung 13a, b gleichen vor der Herstellung des jeweiligen Objekts 4a, b anhand eines Vergleichs der im Datenstrang 1 vorhandenen Herstellungsdatensätze 23a, b mit dem Chargendatensatz 28 ab, ob die Herstellung eines weiteren Objekts 4a, b zulässig ist. Auf diese Weise wird hier beispielsweise dem Geometrieurheber 6 die Möglichkeit gegeben, die zahlenmäßige Herstellung des Objekts 4a, b etwa basierend auf einer entsprechenden Vergütung zu kontrollieren und einzuschränken.

Die Elemente 2 des Datenstrangs 1 sind vorliegend gemäß einer Reihenfolge sortiert angeordnet, welche sich aus einem jeweiligen Zeitstempel 20 jedes Elements 2 ergibt. Der Zeitstempel 20 entspricht dem Zeitpunkt der Erstellung des jeweiligen Elements 2. Speziell werden bei der Darstellung der Fig. 2 die Elemente 2 von links nach rechts jünger, sodass - in Übereinstimmung mit der obigen Beschreibung - das Anforderungsprofil 27 das erste Element 2 dieser Reihenfolge bildet. Daher wird ein neu erstelltes und in den Datenstrang 1 eingefügtes Element 2 bei der Darstellung der Fig. 2 am rechten Ende der Reihe der Elemente 2 angeordnet.

Die kryptologische Verkettung der Elemente 2 wird nun anhand der Fig. 2 erläutert. Zunächst weist der Datenstrang 1 für jedes Element 2 einen entsprechenden Element-Hashwert 18 auf, welcher Element-Hashwert 18 hier durch Anwendung einer schlüsselabhängigen Hashfunktion auf das jeweilige Element 2 erzeugt wurde. Das Erstellen der digitalen Signatur des Elements 2 kann auch umfassen, den privaten Signaturschlüssel für die digitale Signatur auf den jeweiligen Element-Hashwert 18 anzuwenden statt auf das digital zu signierende Element 2 selbst. Gleichwohl wird damit ebenfalls eine digitale Signatur des betreffenden Elements 2 selbst erreicht.

Zusätzlich zu den Element-Hashwerten 18 weist der Datenstrang 1 eine Reihe von Meta-Hashwerten 19 und speziell einen Meta-Hashwert 19 für jedes Element 2 des Datenstrangs 1 auf, sodass jeder Meta-Hashwert 19 einem Element 2 zugeordnet ist. Die Meta-Hashwerte 19 bilden eine verkettete Liste, deren Reihenfolge der oben beschriebenen Reihenfolge der Elemente 2 entspricht, denen die Meta-Hashwerte 19 jeweils zugeordnet sind. Entsprechend dieser Reihenfolge ist jedem Meta-Hashwert 19 - mit Ausnahme des ersten Meta-Hashwerts 19 der verketten Liste - ein jeweils vorangehender Meta-Hashwert 19 zugeordnet. Jeder Meta-Hashwert 19 wird durch Anwendung einer schlüsselabhängigen Hashfunktion auf das zugeordnete Element 2 einerseits und auf den vorangehenden Meta-Hashwert 19 andererseits erzeugt. Dem ersten Meta-Hashwert 19 ist ein in an sich beliebiger Art und Weise bestimmbarer Initialwert 19a zugeordnet, sodass abweichend von den anderen Meta-Hashwerten 19 der erste Meta-Hashwert 19 durch Anwendung der schlüsselabhängigen Hashfunktion auf das zugeordnete Element 2 - also das erste Element 2 - einerseits und auf den Initialwert 19a andererseits erzeugt wird.

Auf diese Weise wird nicht nur die Integrität der Elemente 2 einzeln, sondern auch die Integrität der Gesamtheit der Elemente 2 und ihrer Reihenfolge kryptologisch gesichert.

Das Einfügen eines neuen Elements 2 in den Datenstrang 1 erfolgt dann beispielsweise dadurch, dass das Element 2 an das Ende der Reihenfolge der Elemente 2 einsortiert wird und dass ein Element-Hashwert 18 für dieses neue Element 2 durch Anwendung der Hashfunktion auf das Element 2 erzeugt wird. Auch dieser Element-Hashwert 18 wird dem Datenstrang 1 zugefügt. Anschließend wird die Hashfunktion auf diesen Element-Hashwert 18 sowie auf den Meta-Hashwert 19 des vormals letzten bzw. jüngsten Elements 2, also des vormals am Ende der Reihenfolge einsortierten Elements 2, angewandt und auf diese Weise der Meta-Hashwert 19 erhalten und dem Datenstrang 1 zugefügt. Auf diese Weise kann die kryptologische Verkettung der Element 2 auch auf neue Element 2 ausgedehnt werden.

In jedem Fall kann an dem vollständigen Datenstrang 1 erstens anhand der digitalen Signatur jedes Elements 2 überprüft werden, ob alle Elemente 2 von dem jeweiligen Urheber 6a-c des Elements 2 bzw. dem Bearbeiter 10 stammen. Zweitens kann anhand der kryptologischen Verkettung, etwa gemäß der obenstehenden Beschreibung, auch überprüft werden, dass kein wie oben beschrieben eingefügtes Element 2 aus dem Datenstrang 1 entfernt oder in seiner Reihenfolge verändert wurde.

Es findet nach jeder Übertragung des Datenstrangs 1 auf das Einfügen eines neuen Elements 2 an die Teilnehmer 11 eine Überprüfung der kryptologischen Verkettung und der digitalen Signaturen durch die Teilnehmer 11 statt. Wird eine Unregelmäßigkeit durch einen Teilnehmer 11 festgestellt, ergeht eine Warnmitteilung an die übrigen Teilnehmer 11.

Schließlich zählt zu den Bearbeitern 10 auch eine Prüfvorrichtung 24, welche ein hergestelltes Objekt 4a, b - nach dem körperlichen Transport des Objekts 4a, b von der jeweiligen Vorrichtung zur additiven Fertigung 13a, b zu der Prüfvorrichtung 24 - einem Prüfvorgang unterzieht. Dieser Prüfvorgang kann auf einer Prüfvorgabe basieren, welche ebenfalls - wie hier allerdings nicht gezeigt ist - Teil eines Elements 2 des Datenstrangs 1 sein kann. Bei dem Prüfvorgang gemessene Prüfwerte werden in Übereinstimmung mit der Darstellung der Fig. 2 in einem Prüfdatensatz 25 als Element 2 von der Prüfvorrichtung 24 in den Datenstrang 1 eingefügt.

## Patentansprüche

1. Verfahren zur kryptologischen Sicherung eines additiven Fertigungsvorgangs, wobei ein Datenstrang (1) kryptologisch verkettete Elemente (2) zur Beschreibung des Fertigungsvorgangs aufweist, wobei die Elemente (2) mindestens einen Definitionsdatensatz (3a-c) zur Definition eines Objekts (4a, b) für eine additive Fertigung aufweisen, wobei der mindestens eine Definitionsdatensatz (3a-c) das Objekt (4a, b) zumindest teilweise räumlich für die additive Fertigung definiert und ein Ausgangsmaterial (17) des Objekts (4a, b) für die additive Fertigung definiert, wobei der mindestens eine Definitionsdatensatz (7) zur Definition des Ausgangsmaterials (6a) ein oder mehrere thermoplastische Materialien in Form schmelzfähiger Kunststoffe (14) definiert und wobei der mindestens eine Definitionsdatensatz (3a-c) von einem jeweiligen Urheber (6a-c) in den Datenstrang (1) eingefügt und die kryptologische Verkettung auf den mindestens einen Definitionsdatensatz (3a-c) ausgedehnt wird, wobei der Datenstrang (1) über ein System von Computernetzwerken (12) an eine Vorrichtung zur additiven Fertigung (13a, b) zur Herstellung des Objekts (4a, b) mittels der additiven Fertigung übertragen wird, wobei die Integrität der kryptologischen Verkettung überprüft wird und wobei die Vorrichtung zur additiven Fertigung (13a, b) basierend auf dem mindestens einen Definitionsdatensatz (3a, b) das Objekt (4a, b) mittels der additiven Fertigung herstellt.

2. Verfahren nach Anspruch 1, **dadurch gekennzeichnet, dass** der mindestens eine Definitionsdatensatz (3a-c) zumindest für einen räumlichen Bereich (8) des Objekts (4a, b) eine in Abhängigkeit einer räumlichen Position im Bereich (8) variierende Eigenschaft (9a-c) des Objekts (4a, b) definiert, vorzugsweise, dass die Eigenschaft (9a-c) des Objekts (4a, b) eine funktionale Eigenschaft ist, insbesondere, dass die Eigenschaft (9a-c) des Objekts (4a, b) eine Materialzusammensetzung des Objekts (4a, b) ist, weiter vorzugsweise, dass die Eigenschaft (9a-c) des Objekts (4a, b) je Voxel des Bereichs (8) definiert ist.

3. Verfahren nach Anspruch 1 oder 2, **dadurch gekennzeichnet, dass** der mindestens eine Definitionsdatensatz (7) zur Definition des Ausgangsmaterials (6a) die ein oder mehreren thermoplastische Materialien in Form schmelzfähiger Kunststoffe (14) mit einer Teilchengröße und/oder einer Schmelzeigenschaft definiert, insbesondere auch mindestens ein Fließmittel (15) des Ausgangsmaterials (6a) definiert.

4. Verfahren nach einem der Ansprüche 1 bis 3, **dadurch gekennzeichnet, dass** der mindestens eine Definitionsdatensatz (3a-c) einen Fertigungsprozess, insbesondere zur Art des Schichtaufbaus, des Objekts (4a, b) definiert, vorzugsweise, dass der mindestens eine Definitionsdatensatz (3a-c) zur Definition des Fertigungsprozesses des Objekts (4a, b) ein Verfahren zur Schmelzschichtung (Fused Filament Fabrication, FFF oder Fused Deposition Modeling, FDM), ein Selective Laser Sintering, ein Selective Laser Melting oder ein High Speed Sintering (HSS) als Fertigungsprozess des Objekts (4a, b) definiert.

5. Verfahren nach einem der Ansprüche 1 bis 4, **dadurch gekennzeichnet, dass** die Elemente (2) jeweils digital signiert sind, vorzugsweise, dass der jeweilige Urheber (4a, b) den mindestens einen Definitionsdatensatz (3a-c) beim Einfügen digital signiert, insbesondere, dass bei der Überprüfung der Integrität der kryptologischen Verkettung die digitalen Signaturen überprüft werden.

6. Verfahren nach einem der Ansprüche 1 bis 5, **dadurch gekennzeichnet, dass** die Elemente (2) des Datenstrangs (1) gemäß einer Reihenfolge sortiert, vorzugsweise, dass die Elemente (2) des Datenstrangs (1) einen jeweiligen Zeitstempel (20) zum Zeitpunkt der Erstellung des jeweiligen Elements (2) aufweisen und dass die Reihenfolge, gemäß der die Elemente (2) des Datenstrangs (1) sortiert sind, der zeitlichen Reihenfolge gemäß der jeweiligen Zeitstempel (20) entsprechen.

7. Verfahren nach einem der Ansprüche 1 bis 6, **dadurch gekennzeichnet, dass** eine Vielzahl von Bearbeitern (10), umfassend die jeweiligen Urheber (6a-c) des mindestens einen Definitionsdatensatzes (3a-c) , ein neues Element (2) in den Datenstrang (1) einfügt und dass die kryptologische Verkettung der Elemente (2) auf das neue Element (2) ausgedehnt wird, insbesondere der einfügende Bearbeiter (10) das neue Element (2) beim Einfügen digital signiert, vorzugsweise, dass das eingefügte neue Element (2) als letztes Element (2) der Reihenfolge eingefügt wird.

8. Verfahren nach Anspruch 7, **dadurch gekennzeichnet, dass** nach Einfügen eines neuen Elements (2) der Datenstrang über das System von Computernetzwerken an eine Vielzahl von Teilnehmern (11), vorzugsweise umfassend die Bearbeiter (10), übertragen und jeweils hinterlegt wird, insbesondere, dass die Integrität der kryptologischen Verkettung, insbesondere auch der digitalen Signaturen, von der Vielzahl von Teilnehmern (11) überprüft wird, weiter vorzugsweise, dass bei einem Feststellen einer fehlenden Integrität der feststellende Teilnehmer (11) eine Warnmitteilung an die Vielzahl von Teilnehmern (11) sendet, weiter insbesondere, dass die Vielzahl von Teilnehmern (11) eine verteile Datenbank bildet, welche den Datenstrang (1) als Blockchain verwaltet.

9. Verfahren nach Anspruch 7 oder 8, **dadurch gekennzeichnet, dass** die Vielzahl von Bearbeitern (10) die Vorrichtung zur additiven Fertigung (13a, b) umfasst und dass die Vorrichtung zur additiven Fertigung (13a, b) nach Herstellung des Objekts (4a, b) einen Herstellungsdatensatz (22a, b) mit Informationen zum Vorgang der Herstellung des Objekts (4a, b), vorzugsweise mit einer eindeutigen Kennung (23a, b) des hergestellten Objekts (4a, b), als neues Element (2) in den Datenstrang (1) einfügt.

10. Verfahren nach Anspruch 9, **dadurch gekennzeichnet, dass** die Vielzahl von Bearbeitern (10) eine Vielzahl von Vorrichtungen zur additiven Fertigung (13a, b) umfasst, welche jeweils entfernt zueinander und durch das System von Computernetzwerken (12) miteinander verbunden angeordnet sind und welche jeweils basierend auf den Definitionsdatensätzen (3a-c) ein jeweiliges Objekt (4a, b) mittels additiver Fertigung herstellen, vorzugsweise, dass die Vielzahl von Vorrichtungen zur additiven Fertigung (13a, b) nach Herstellung des jeweiligen Objekts (4a, b) einen jeweiligen Herstellungsdatensatz (23a, b) mit Informationen zum Vorgang der Herstellung des jeweiligen Objekts (4a, b), vorzugsweise mit einer eindeutigen Kennung (23a, b) des jeweiligen hergestellten Objekts (4a, b), als jeweilig neues Element (2) in den Datenstrang (1) einfügen.

11. Verfahren nach Anspruch 10, **dadurch gekennzeichnet, dass** bei der Herstellung des Objekts (4a, b) durch die Vorrichtung zur additiven Fertigung (13a, b) die eindeutige Kennung (23a, b) des hergestellten Objekts (4a, b) in das hergestellte Objekt (4a, b) eingebracht wird, sodass die Kennung (23a, b) aus dem hergestellten Objekt (4a, b) ausgelesen werden kann, vorzugsweise, dass die Informationen zum Vorgang der Herstellung des Objekts (4a, b) während der Herstellung des Objekts (4a, b) gemessene Prozessmessinformationen und/oder nach der Herstellung des Objekts (4a, b) am hergestellten Objekt (4a, b) gemessene Objektmessinformationen umfassen.

12. Verfahren nach einem der Ansprüche 7 bis 11, **dadurch gekennzeichnet, dass** die Vielzahl von Bearbeitern (10) eine Prüfvorrichtung (24) zur Prüfung des hergestellten Objekts (4a, b) aufweist, dass die Prüfvorrichtung (24) einen Prüfvorgang am hergestellten Objekt (4a, b) unter Messung von Prüfwerten durchführt und dass die Prüfvorrichtung (24) nach Durchführung des Prüfvorgangs (24) einen Prüfdatensatz (25) mit den gemessenen Prüfwerten als neues Element (2) in den Datenstrang (1) einfügt, vorzugsweise, dass der Prüfvorgang basierend auf einer Prüfvorgabe durchgeführt wird, welche Prüfvorgabe als Element (2) von dem Datenstrang (1) umfasst ist.

13. Verfahren nach einem der Ansprüche 1 bis 12, **dadurch gekennzeichnet, dass** der Datenstrang (1) ein Element (2) mit einem Chargendatensatz (28) umfasst, wobei der Chargendatensatz eine maximale Anzahl von basierend auf dem mindestens einen Definitionsdatensatz (3a-c) herzustellenden Objekten (4a-b) definiert, vorzugsweise, dass die Vorrichtung zur additiven Fertigung (13a, b), insbesondere die Vielzahl der Vorrichtungen zur additiven Fertigung (13a, b), das insbesondere jeweilige Objekt (4a, b) nur herstellt, wenn die Zahl der hergestellten Objekte (4a, b) gemäß den Herstellungsdatensätzen in dem Datenstrang kleiner als die definierte maximale Anzahl ist.

14. Datenstrang (1) zur kryptologischen Sicherung eines additiven Fertigungsvorgangs, wobei der Datenstrang (1) kryptologisch verkettete Elemente (2) zur Beschreibung des Fertigungsvorgangs aufweist, wobei die Elemente (2) mindestens einen Definitionsdatensatz (3a-c) zur Definition eines Objekts (4a, b) für eine additive Fertigung aufweisen, wobei der mindestens eine Definitionsdatensatz (3a-c) das Objekt (4a, b) zumindest teilweise räumlich für die additive Fertigung definiert und ein Ausgangsmaterial (17) des Objekts (4a, b) für die additive Fertigung definiert, wobei der mindestens eine Definitionsdatensatz (7) zur Definition des Ausgangsmaterials (6a) ein oder mehrere thermoplastische Materialien in Form schmelzfähiger Kunststoffe (14) definiert und wobei der mindestens eine Definitionsdatensatz (3a-c) dazu eingerichtet ist, dass eine Vorrichtung zur additiven Fertigung (13a, b) basierend auf dem mindestens einen Definitionsdatensatz (3a-c) das Objekt (4a, b) mittels der additiven Fertigung herstellt.

15. System zur kryptologischen Sicherung eines additiven Fertigungsvorgangs, mit einem jeweiligen Urheber (6a-c) zum Einfügen mindestens eines Definitionsdatensatzes (3a-c) zur Definition eines Objekts (4a, b) für eine additive Fertigung in einen Datenstrang (1) mit kryptologisch verketteten Elementen (2) zur Beschreibung des Fertigungsvorgangs, wobei der mindestens eine Definitionsdatensatz (3a-c) das Objekt (4a, b) zumindest teilweise räumlich für die additive Fertigung definiert und ein Ausgangsmaterial (17) des Objekts (4a, b) für die additive Fertigung definiert, wobei der mindestens eine Definitionsdatensatz (7) zur Definition des Ausgangsmaterials (6a) ein oder mehrere thermoplastische Materialien in Form schmelzfähiger Kunststoffe (14) definiert, mit einer Vorrichtung zur additiven Fertigung (13a, b) zur Herstellung des Objekts (4a, b) mittels der additiven Fertigung basierend auf dem mindestens einen Definitionsdatensatz (3a-c), mit einem System von Computernetzwerken (12) zur Übertragung des Datenstrangs (1) an die Vorrichtung zur additiven Fertigung (13a, b), wobei die Vorrichtung zur additiven Fertigung (13a, b) zur Prüfung der Integrität der kryptologischen Verkettung eingerichtet ist.

## Claims

1. Method for cryptologically securing an additive production process, wherein a data stream (1) comprises cryptologically linked elements (2) for describing the production process, wherein the elements (2) comprise at least one definition dataset (3a-c) for defining an object (4a, b) for additive production, wherein the at least one definition dataset (3a-c) at least partially spatially defines the object (4a, b) for the additive production and defines a starting material (17) of the object (4a, b) for the additive production, wherein the at least one definition dataset (7) for defining the starting material (6a) defines one or more thermoplastic materials in the form of meltable plastics (14) and wherein the at least one definition dataset (3a-c) is inserted by a respective author (6a-c) into the data stream (1) and the cryptological linking is expanded to the at least one definition dataset (3a-c), wherein the data stream (1) is transferred via a system of computer networks (12) to a device for additive production (13a, b) for producing the object (4a, b) by means of the additive production, wherein the integrity of the cryptological linking is checked, and wherein the device for additive production (13a, b) produces the object (4a, b) based on the at least one definition dataset (3a, b) by means of the additive production.

2. Method according to Claim 1, **characterized in that** the at least one definition dataset (3a-c) defines, at least for one spatial region (8) of the object (4a, b), a property (9a-c) of the object (4a, b) varying in dependence on a spatial position in the region (8), preferably the property (9a-c) of the object (4a, b) is a functional property, in particular the property (9a-c) of the object (4a, b) is a material composition of the object (4a, b), more preferably the property (9a-c) of the object (4a, b) is defined per voxel of the region (8).

3. Method according to Claim 1 or 2, **characterized in that** the at least one definition dataset (7) for defining the starting material (6a) defines the one or more thermoplastic materials in the form of meltable plastics (14) with a particle size and/or a melting property, in particular also defines at least one plasticizer (15) of the starting material (6a).

4. Method according to any one of Claims 1 to 3, **characterized in that** the at least one definition dataset (3a-c) defines a production process, in particular in respect of the type of the layer buildup, of the object (4a, b), preferably the at least one definition dataset (3a-c) for defining the production process of the object (4a, b) defines a method for melt layering (fused filament fabrication, FFF or fused deposition modeling, FDM), selective laser sintering, selective laser melting, or high-speed sintering (HSS) as the production process of the object (4a, b).

5. Method according to any one of Claims 1 to 4, **characterized in that** the elements (2) are each digitally signed, preferably the respective author (4a, b) digitally signs the at least one definition dataset (3a-c) during the insertion, in particular the digital signatures are checked during the checking of the integrity of the cryptological linking.

6. Method according to any one of Claims 1 to 5, **characterized in that** the elements (2) of the data stream (1) are sorted according to a sequence, preferably the elements (2) of the data stream (1) comprise a respective timestamp (20) at the point in time of the preparation of the respective element (2), and the sequence according to which the elements (2) of the data stream (1) are sorted corresponds to the chronological sequence according to the respective timestamp (20).

7. Method according to any one of Claims 1 to 6, **characterized in that** a plurality of processors (10), comprising the respective authors (6a-c) of the at least one definition dataset (3a-c), inserts a new element (2) into the data stream (1), and the cryptological linking of the elements (2) is expanded to the new element (2), in particular the inserting processor (10) digitally signs the new element (2) during the insertion, preferably the inserted new element (2) is inserted as the last element (2) of the sequence.

8. Method according to Claim 7, **characterized in that**, after insertion of a new element (2), the data stream is transferred via the system of computer networks to a plurality of users (11), preferably comprising the processors (10), and stored in each case, in particular the integrity of the cryptological linking, in particular also of the digital signatures, is checked by the plurality of users (11), more preferably, if a lack of integrity is established, the establishing user (11) transmits a warning message to the plurality of users (11), more preferably the plurality of users (11) forms a distributed database which manages the data stream (1) as a block chain.

9. Method according to Claim 7 or 8, **characterized in that** the plurality of processors (10) comprises the device for additive production (13a, b), and the device for additive production (13a, b), after production of the object (4a, b), inserts a production dataset (22a, b) having items of information on the process of the production of the object (4a, b), preferably having a unique identifier (23a, b) of the produced object (4a, b), as a new element (2) into the data stream (1).

10. Method according to Claim 9, **characterized in that** the plurality of processors (10) comprises a plurality of devices for additive production (13a, b) which are each arranged remotely from one another and connected to one another by the system of computer networks (12) and which each produce a respective object (4a, b) by means of additive production based on the definition datasets (3a-c), preferably the plurality of devices for additive production (13a, b), after production of the respective object (4a, b), insert a respective production dataset (23a, b) having items of information on the process of the production of the respective object (4a, b), preferably having a unique identifier (23a, b) of the respective produced object (4a, b), as a respective new element (2) into the data stream (1).

11. Method according to Claim 10, **characterized in that**, during the production of the object (4a, b) by the device for additive production (13a, b), the unique identifier (23a, b) of the produced object (4a, b) is introduced into the produced object (4a, b), so that the identifier (23a, b) can be read out from the produced object (4a, b), preferably the items of information on the process of the production of the object (4a, b) comprise items of process measurement information measured during the production of the object (4a, b) and/or items of object measurement information measured after the production of the object (4a, b) on the produced object (4a, b).

12. Method according to any one of Claims 7 to 11, **characterized in that** the plurality of processors (10) comprises a testing device (24) for testing the produced object (4a, b), the testing device (24) carries out a test process on the produced object (4a, b) with measurement of test values, and the testing device (24), after carrying out the test process (24), inserts a test dataset (25) having the measured test values as a new element (2) into the data stream (1), preferably the test process is carried out based on a test target, which test target is comprised as an element (2) by the data stream (1).

13. Method according to any one of Claims 1 to 12, **characterized in that** the data stream (1) comprises an element (2) having a batch dataset (28), wherein the batch dataset defines a maximum number of objects (4a-b) to be produced based on the at least one definition dataset (3a-c), preferably the device for additive production (13a, b), in particular the plurality of devices for additive production (13a, b), only produces the in particular respective object (4a, b) if the number of the produced objects (4a, b) according to the production datasets in the data stream is less than the defined maximum number.

14. Data stream (1) for cryptologically securing an additive production process, wherein the data stream (1) comprises cryptologically linked elements (2) for describing the production process, wherein the elements (2) comprise at least one definition dataset (3a-c) for defining an object (4a, b) for additive production, wherein the at least one definition dataset (3a-c) at least partially spatially defines the object (4a, b) for the additive production and defines a starting material (17) of the object (4a, b) for the additive production, wherein the at least one definition dataset (7) for defining the starting material (6a) defines one or more thermoplastic materials in the form of meltable plastics (14) and wherein the at least one definition dataset (3a-c) is configured for the purpose that a device for additive production (13a, b) produces the object (4a, b) by means of the additive production based on the at least one definition dataset (3a-c).

15. System for cryptologically securing an additive production process, having a respective author (6a-c) for inserting at least one definition dataset (3a-c) for defining an object (4a, b) for additive production into a data stream (1) having cryptologically linked elements (2) to describe the production process, wherein the at least one definition dataset (3a-c) at least partially spatially defines the object (4a, b) for the additive production and defines a starting material (17) of the object (4a, b) for the additive production, wherein the at least one definition dataset (7) for defining the starting material (6a) defines one or more thermoplastic materials in the form of meltable plastics (14), having a device for the additive production (13a, b) for producing the object (4a, b) by means of the additive production based on the at least one definition dataset (3a-c), having a system of computer networks (12) for transferring the data stream (1) to the device for additive production (13a, b), wherein the device for additive production (13a, b) is configured to check the integrity of the cryptological linking.

## Revendications

1. Procédé de sécurisation cryptologique d'un procédé de fabrication additive, une chaîne de données (1) comportant des éléments (2) enchaînés de manière cryptologique et destinés à décrire le processus de fabrication, les éléments (2) comportant au moins un ensemble de données de définition (3a-c) destiné à définir un objet (4a, b) pour la fabrication additive, l'au moins un ensemble de données de définition (3a-c) définissant l'objet (4a, b) au moins en partie spatialement pour la fabrication additive et définissant une matière de départ (17) de l'objet (4a, b) pour la fabrication additive, l'au moins un ensemble de données de définition (7) destiné à définir la matière de départ (6a) définissant une ou plusieurs matières thermoplastiques se présentant sous la forme de matières synthétiques (14) aptes à la fusion et l'au moins un ensemble de données de définition (3a-c) étant inséré dans la chaîne de données (1) par un auteur respectif (6a-c) et le chaînage cryptologique étant étendu à l'au moins un ensemble de données de définition (3a-c), la chaîne de données (1) étant transmis par le biais d'un système de réseaux d'ordinateurs (12) à un dispositif de fabrication additive (13a, b) pour fabriquer l'objet (4a, b) par fabrication additive, l'intégrité du chaînage cryptologique étant vérifiée et le dispositif de fabrication additive (13a, b) fabriquant l'objet (4a, b) par fabrication additive sur la base dudit au moins un ensemble de données de définition (3a, b).

2. Procédé selon la revendication 1, **caractérisé en ce que** l'au moins un ensemble de données de définition (3a-c) définit, au moins pour une zone spatiale (8) de l'objet (4a, b), une propriété (9a-c) de l'objet (4a, b) qui varie en fonction d'une position spatiale dans la zone (8), de préférence **en ce que** la propriété (9a-c) de l'objet (4a, b) est une propriété fonctionnelle, en particulier la propriété (9a- c) de l'objet (4a, b) est une composition de matière de l'objet (4a, b), de préférence **en ce que** la propriété (9a-c) de l'objet (4a, b) est définie par voxel de la zone (8).

3. Procédé selon la revendication 1 ou 2, **caractérisé en ce que** l'au moins un ensemble de données de définition (7) destiné à définir la matière de départ (6a) définit en particulier l'au moins une matière thermoplastique sous la forme d'une matière synthétique (14) apte à la fusion ayant une granulométrie et/ou une propriété de fusion, en particulier définit également au moins un agent d'écoulement (15) de la matière de départ (6a).

4. Procédé selon l'une des revendications 1 à 3, **caractérisé en ce que** l'au moins un ensemble de données de définition (3a-c) définit un processus de fabrication, en particulier pour le type de structure en couches, de l'objet (4a, b), de préférence **en ce que** l'au moins un ensemble de données de définition (3a-c) destiné à définir le processus de fabrication de l'objet (4a, b) définissant un procédé de dépôt par couches de matière en fusion (Fused Filament Fabrication FFF ou Fused Déposition Modeling FDM), un procédé Selective Laser Sintering, un procédé Selective Laser Melting ou un procédé High Speed Sintering (HSS) comme processus de fabrication de l'objet (4a, b).

5. Procédé selon l'une des revendications 1 à 4, **caractérisé en ce que** les éléments (2) sont chacun signés numériquement, de préférence **en ce que** l'auteur respectif (4a, b) signe numériquement au moins un ensemble de données de définition (3a-c) lors de l'insertion, en particulier **en ce que** les signatures numériques sont vérifiées lors de la vérification de l'intégrité du chaînage cryptologique.

6. Procédé selon l'une des revendications 1 à 5, **caractérisé en ce que** les éléments (2) de la chaîne de données (1) sont triés selon une séquence, de préférence **en ce que** les éléments (2) de la chaîne de données (1) comportent un horodatage respectif (20) à l'instant de la création de l'élément respectif (2) et **en ce que** la séquence suivant laquelle les éléments (2) de la chaîne de données (1) sont triés correspondent à l'ordre temporel selon l'horodatage respectif (20).

7. Procédé selon l'une des revendications 1 à 6, **caractérisé en ce qu'**un grand nombre d'opérateurs (10), comprenant les auteurs respectifs (6a-c) de l'au moins un ensemble de données de définition (3a-c), insère un nouvel élément (2) dans la chaîne de données (1) et **en ce que** le chaînage cryptologique des éléments (2) est étendu au nouvel élément (2), en particulier l'opérateur (10) qui effectue l'insertion signe numériquement le nouvel élément (2) lors de l'insertion, de préférence **en ce que** le nouvel élément (2) inséré est inséré comme dernier élément (2) de la séquence.

8. Procédé selon la revendication 7, **caractérisé en ce que**, après l'insertion d'un nouvel élément (2), la chaîne de données est transmise par le bais du système de réseaux d'ordinateurs à un grand nombre de participants (11), de préférence comprenant les opérateurs (10), et stockées à chaque fois, en particulier **en ce que** l'intégrité du chaînage cryptologique, en particulier également des signatures numériques, est vérifiée par le grand nombre de participants (11), plus préférablement **en ce que**, lorsqu'un défaut d'intégrité est détecté, le participant (11) qui le détecte envoie un message d'avertissement au grand nombre de participants (11), de plus en particulier **en ce que** le grand nombre de participants (11) forme une base de données distribuée qui gère la chaîne de données (1) comme une chaîne de blocs.

9. Procédé selon la revendication 7 ou 8, **caractérisé en ce que** le grand nombre d'opérateurs (10) comprend le dispositif de fabrication additive (13a, b) et **en ce que**, après la fabrication de l'objet (4a, b), le dispositif de fabrication additive (13a, b) insère un ensemble de données de fabrication (22a, b) contenant des informations sur le processus de fabrication de l'objet (4a, b), de préférence un identifiant unique (23a, b) de l'objet (4a, b) fabriqué, comme nouvel élément (2) dans la chaîne de données (1).

10. Procédé selon la revendication 9, **caractérisé en ce que** le grand nombre d'opérateurs (10) comprend un grand nombre de dispositifs de fabrication additive (13a, b), qui sont disposés chacun à distance les uns des autres en étant reliés entre eux par le système de réseaux d'ordinateurs (12) et qui fabriquent chacun un objet respectif (4a, b) par fabrication additive sur la base des ensembles de données de définition (3a-c), de préférence **en ce que**, après avoir fabriqué l'objet respectif (4a, b), le grand nombre de dispositifs de fabrication additive (13a, b) insère un ensemble de données de fabrication respectif (23a, b) contenant des informations sur le processus de fabrication de l'objet respectif (4a, b), de préférence un identifiant unique (23a, b) de l'objet respectif (4a, b) fabriqué, comme nouvel élément respectif (2) dans la chaîne de données (1).

11. Procédé selon la revendication 10, **caractérisé en ce que**, lors de la fabrication de l'objet (4a, b) par le dispositif de fabrication additive (13a, b), l'identifiant unique (23a, b) de l'objet fabriqué (4a, b) est introduit dans l'objet fabriqué (4a, b) de telle sorte que l'identifiant (23a, b) puisse être lu à partir de l'objet (4a, b) fabriqué, de préférence **en ce que** les informations sur le processus de fabrication de l'objet (4a, b) incluent des informations de mesure de processus mesurées pendant la fabrication de l'objet (4a, b) et/ou des informations de mesure d'objet mesurées sur l'objet fabriqué (4a, b) après la fabrication de l'objet (4a, b).

12. Procédé selon l'une des revendications 7 à 11, **caractérisé en ce que** le grand nombre d'opérateurs (10) comporte un dispositif de vérification (24) destiné à vérifier l'objet (4a, b) fabriqué, **en ce que** le dispositif de vérification (24) effectue un processus de vérification sur l'objet (4a, b) fabriqué en mesurant des valeurs de vérification et **en ce que**, après avoir réalisé le processus de vérification (24), le dispositif de vérification (24) insère un ensemble de données de vérification (25), comprenant les valeurs de vérification mesurées, comme nouvel élément (2) dans la chaîne de données (1), de préférence **en ce que** le processus de vérification est effectué sur la base d'une spécification de vérification, laquelle spécification de vérification est incluse comme élément (2) dans la chaîne de données (1).

13. Procédé selon l'une des revendications 1 à 12, **caractérisé en ce que** la chaîne de données (1) comprend un élément (2) incluant un ensemble de données de fusion (28), l'ensemble de données de fusion définissant un nombre maximum d'objets (4a-b) à fabriquer sur la base de l'au moins un ensemble de données de définition (3a-c), de préférence **en ce que** le dispositif de fabrication additive (13a, b), en particulier le grand nombre de dispositifs de fabrication additive (13a, b), fabrique l'objet (4a, b), notamment respectif, seulement si le nombre d'objets (4a, b) fabriqués selon les ensembles de données de fabrication dans la chaîne de données est inférieur au nombre maximum défini.

14. Chaîne de données (1) destinée à la sécurisation cryptologique d'un processus de fabrication additive, la chaîne de données (1) comportant des éléments (2) enchaînés de manière cryptologique et destinés à décrire le processus de fabrication, les éléments (2) comportant au moins un ensemble de données de définition (3a-c) destinés à définir un objet (4a, b) pour la fabrication additive, l'au moins un ensemble de données de définition (3a-c) définissant l'objet (4a, b) au moins en partie spatialement pour la fabrication additive et définissant une matière de départ (17) de l'objet (4a, b) pour la fabrication additive, l'au moins un ensemble de données de définition (7) destiné à définir la matière de départ (6a) définissant une ou plusieurs matières thermoplastiques sous forme de matières synthétiques (14) aptes à la fusion et l'au moins un ensemble de données de définition (3a-c) étant conçu de telle sorte qu'un dispositif de fabrication additive (13a, b) fabrique l'objet (4a, b) par fabrication additive sur la base de l'au moins un ensemble de données de définition (3a-c).

15. Système de sécurisation cryptologique d'un processus de fabrication additive, comprenant un auteur respectif (6a-c) destiné à insérer au moins un ensemble de données de définition (3a-c) destiné à définir un objet (4a, b) pour la fabrication additive dans une chaîne de données (1) comprenant des éléments (2) enchaînés de manière cryptologique et destinés à décrire le processus de fabrication, l'au moins un ensemble de données de définition (3a-c) définissant l'objet (4a, b) au moins en partie spatialement pour la fabrication additive et définissant une matière de départ (17) de l'objet (4a, b) pour la fabrication additive, l'au moins un ensemble de données de définition (7) destiné à définir la matière de départ (6a) définissant une ou plusieurs matières thermoplastiques sous forme de matières synthétiques (14) aptes à la fusion, un dispositif de fabrication additive (13a, b) destiné à fabriquer l'objet (4a, b) par fabrication additive sur la base d'au moins un ensemble de données de définition (3a-c), un système de réseaux d'ordinateurs (12) destinés à transmettre la chaîne de données (1) au dispositif de fabrication additive (13a, b), le dispositif de fabrication additive (13a, b) étant conçu pour vérifier l'intégrité du chaînage cryptologique.
